# EUROPEAN PATENT SPECIFICATION

(11) **EP 2 960 762 B1**
(45) Date of publication and mention of the grant of the patent: **07.02.2024**
(21) Application number: 13876072.3
(22) Date of filing: 13.09.2013
(51) Int. Cl.: G06F 3/04817, G01C 17/28, G01C 21/20, G06F 1/16

(54) **DYNAMIC ICON DISPLAY METHOD AND DEVICE**
VERFAHREN UND VORRICHTUNG ZUR DYNAMISCHEN ANZEIGE VON SYMBOLEN
PROCÉDÉ ET DISPOSITIF D'AFFICHAGE D'ICÔNE DYNAMIQUE

(30) Priority: 22.02.2013 CN 201310057402
(43) Date of publication of application: 30.12.2015
(73) Proprietor: Xiaomi Inc., Beijing 100085 (CN)
(72) Inventor: XU, Ruijun, Beijing 100085 (CN); SUN, Peng, Beijing 100085 (CN); LIU, Xinyu, Beijing 100085 (CN)
(74) Representative: Cabinet Beau de Loménie
(86) International application number: PCT/CN2013/083478
(87) International publication number: WO 2014/127625

(56) References cited:
- CN-A- 1 371 232
- CN-A- 1 610 391
- CN-A- 103 135 987
- US-A1- 2005 193 340
- US-A1- 2010 329 642
- US-A1- 2012 117 492
- US-A1- 2013 014 006
- Anonymous: "Slow GUI drawing - Unity Forum", , 28 October 2008 (2008-10-28), XP055585210, Retrieved from the Internet: URL:https://forum.unity.com/threads/slow-g ui-drawing.14402/ [retrieved on 2019-05-02]

## Description

### TECHNICAL FIELD

The present invention relates to the technical field of mobile terminal, and particularly to the technical field of mobile terminal operating system. In particular, the present invention relates to a method and device for displaying a dynamic icon.

### BACKGROUND

The icons play an extremely important role in visual operating systems of computers. The icons may represent a document, a program, a web page, or a command. Besides, with icons, it is possible to execute a command or open a certain type of document. As an entry for initiating an application program in the operating system, the icons have the advantages of convenience and efficiency. Generally, the application program corresponding to an icon may be executed only by clicking or double clicking the icon.

Sizes of icons required by different operating systems are different from each other. For facilitating user's identification, the same picture is often used as an icon of the same application program for a long time. Generally, the icons are static pictures with fixed resolutions and without multi-media effects.

Using a static picture as the icon may only realize the basic function of identification. The static picture neither has a dynamic effect, nor presents other relevant information.

Document US 2013/014 006 discloses methods and apparatus for providing updated content in a user interface by using icon configuration files.

The US patent application publication No. US2012117492 discloses a method and apparatus for processing context data at a communication device.

The thread "Slow GUI drawing" posted in the Unity forum at https://forum.unity.com/threads/slow-gui-drawing.14402/ [retrieved on 2019-05-02] discussed drawing a scroll area with buttons inside.

The European patent application publication No. EP2458478 discloses an information processing apparatus, method and computer program product that cooperate to provide a device changing the way content is displayed depending on an inclination angle of the device.

The US patent application publication No. US2010329642 discloses dynamic icons associated with remote content, which provide one or more pieces of information to a user by changing the appearance of the icon based on changes to data of a data source associated with the icon.

### SUMMARY

In order to overcome the problem of single effect of the static icon in the related art, the present disclosure provides a method and a device for displaying a dynamic icon. The invention is set out in the appended set of claims.

In the method and device for displaying the dynamic icon of the present disclosure, it is possible to generate the dynamic icon corresponding to each program based on the dynamic icon resource pack provided by the program, so that the icon has a dynamic effect.

It should be noted that the above general description and the following detailed description are only exemplary, but does not limit the present disclosure.

### BRIEF DESCRIPTION OF THE DRAWINGS

The accompanying drawings illustrated herein only serve to enable further understanding to the present invention. These drawings constitute a part of the present application, but do not limit the present invention. In the drawings:
Fig. 1 is an illustrative flow chart of a method for displaying a dynamic icon provided by an embodiment of the present invention;
Fig. 2 is an illustrative flow chart of a method for displaying a dynamic compass icon provided by the present invention;
Figs. 3A-3B are illustrative diagrams of a box compass picture and a needle picture of a compass icon provided by the present invention;
Figs. 4A-4B are illustrative diagrams of a dynamic compass icon provided by an embodiment of the present invention;
Fig. 5 is an illustrative block diagram of a device for displaying a dynamic icon provided by an embodiment of the present invention; and
Fig. 6 is an illustrative block diagram of a device for displaying a dynamic icon provided by an embodiment of the present invention.

The specific embodiments of the present disclosure have been illustrated by the above drawings, and more detailed description will be given hereinafter. These drawings and literal description do not intend to limit the scope of the ideas of the present disclosure in any way, but to explain the concept of the present disclosure to the person skilled in the art by referring to the specific embodiments.

### DETAILED DESCRIPTION OF THE EMBODIMENTS

To make the object, technical solution and advantage of the present invention more apparent, the present invention will be described in detail hereinafter with reference to the embodiments and the accompanying drawings. Herein, the exemplary embodiments based on the present invention and the description thereof intend to interpret the present invention, instead of limiting the present invention.

In embodiments of the present invention, there is provided a method and device for displaying a dynamic icon, and the present invention will be described in detail hereinafter with reference to the accompanying drawings.

### First Embodiment

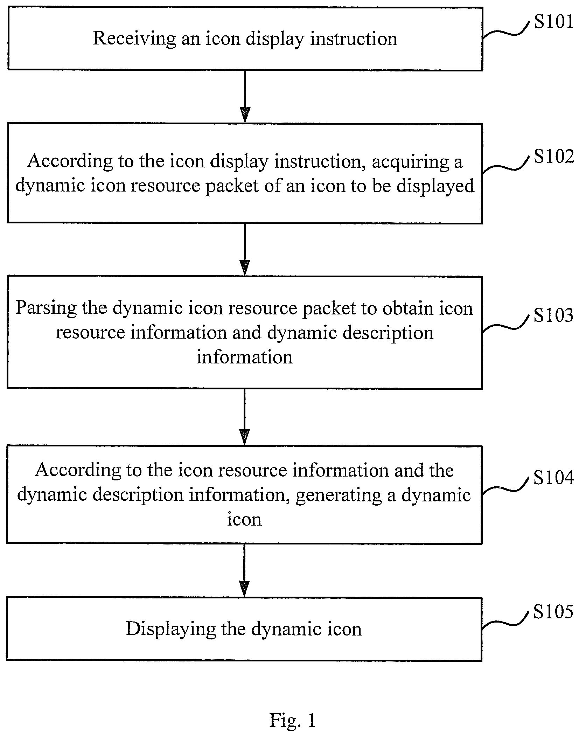

Fig. 1 is a flow chart of a method for displaying a dynamic icon provided by an embodiment of the present invention. As shown in Fig. 1, the method for displaying a dynamic icon comprises the following steps.

S101, receiving an icon display instruction.

In an embodiment of the present invention, a mobile terminal receives an icon display instruction input by a user. The icon display instruction may be an instruction to display a desktop icon. For example, once the user unlocks a screen, the mobile terminal will generally display a desktop interface with a plurality of icons, and in this case, the instruction to unlock the screen input by the user is the icon display instruction. When the user inputs an instruction to exit an application program or close a current application program during execution of a certain application program, the mobile terminal will return to a desktop interface with a plurality of icons, and in this case, the instruction to exit the application program or close the current application program which is input by the user is the icon display instruction.

In other embodiments of the present invention, icons may be displayed on a desktop of an operating system. In addition, after execution of a certain application program, at least one icon may also be displayed on an interface provided by this application program. In this case, the instruction to execute the application program is also the icon display instruction.

S102, obtaining a dynamic icon resource pack of an icon to be displayed based on the icon display instruction.

In an embodiment of the present invention, after receiving the icon display instruction input by the user, the mobile terminal is required to display a corresponding icon finally. Upon receiving an instruction to display the desktop input by the user, the mobile terminal is required to display the desktop background and the icons on desktop. In this case, the mobile terminal is firstly required to obtain dynamic icon resource packs of all the icons to be displayed.

In an embodiment of the present invention, before obtaining the dynamic icon resource packs of all the icons to be displayed, the mobile terminal may firstly judge whether the dynamic icon resource packs corresponding to each icon to be displayed has been stored. If the dynamic icon resource pack corresponding to the icon to be displayed has been stored, the mobile terminal obtains the dynamic icon resource pack of the icon to be displayed, so as to proceed to the subsequent step(s) based on the dynamic icon resource pack to generate a dynamic icon; and if there is no corresponding dynamic icon resource pack of the icon to be displayed, the mobile terminal directly obtains and displays a static icon corresponding to the icon to be displayed.

In an embodiment of the present invention, the format of the dynamic icon resource pack may be defined in advance, which at least includes an icon resource information and a dynamic description information.

S103, analyzing the dynamic icon resource pack to obtain the icon resource information and the dynamic description information.

In an embodiment of the present invention, after obtaining the dynamic icon resource pack of the icon to be displayed, the mobile terminal analyzes the dynamic icon resource pack to obtain the icon resource information and the dynamic description information in the dynamic icon resource pack. The dynamic icon resource pack may be provided by the developer of the application program, and when the user installs the application program, the dynamic icon resource pack of the application program is stored at the same time.

In an embodiment of the present invention, the icon resource information refers to various resource files (a picture file, a text file, and the like) and the location information thereof, which are necessary for displaying the icon. The dynamic description information describes display content and display effect of the icon resource information (picture, text, and the like) by using a custom format, for example, displays a picture, an animation, a text at a certain position, obtains application program information (e.g., date time, weather information) from the system, or obtains sensor data (e.g., compass) from the system. In an embodiment of the present invention, the dynamic icon resource pack may not include animation file(s) or video file(s) generated in advance.

S104, generating a dynamic icon based on the icon resource information and the dynamic description information.

In an embodiment of the present invention, the mobile terminal may not store the animation file or video file of the dynamic icon, but generate in real time the dynamic icon based on the analyzed icon resource information and dynamic description information.

In an embodiment of the present invention, the dynamic description information may further include refresh rate information of the dynamic icon. In step S103, the mobile terminal may obtain the refresh rate information of the dynamic icon from the dynamic description information while obtaining the icon resource information and the dynamic description information by analyzing the dynamic icon resource pack. Then, the mobile terminal determines the refresh rate of the dynamic icon to be generated based on the refresh rate information of the dynamic icon.

In an embodiment of the present invention, icon data information of the dynamic icon includes system status information, sensor data information, and program status information. The mobile terminal obtains such icon data information based on the dynamic description information, and processes the icon resource information and the icon data information based on the dynamic description information so as to generate a dynamic icon. In this way, the dynamic icon may not only have a dynamic effect, but also display various icon data information like current system status information, sensor data information and program status information by utilizing the dynamic effect. Herein, the system status information includes power information, time information, signal strength information, and maybe the like of the current mobile terminal; the sensor data information includes geographical position information, direction information, angular velocity information, acceleration information, and maybe the like of the current mobile terminal; and the program status information includes notification information of the application program, network notification information, and maybe the like.

As for a calendar icon, the icon data information obtained by the mobile terminal may include Gregorian calendar information and lunar calendar information, the icon refresh rate may be set to 1 frame per second, and the dynamic description information may be defined as the dynamic icon alternately displaying Gregorian calendar and lunar calendar. In this way, the mobile terminal finally generates such an effect of the dynamic icon that Gregorian calendar and lunar calendar are alternately displayed every second. In other embodiments of the present invention, the icon data information may further include holiday information and lunar solar term information, and the finally generated dynamic icon may also display holiday information and lunar solar term information alternately.

As for a compass icon, the icon data information obtained by the mobile terminal include sensor data information, the icon refresh rate may be set to 10 or 20 frames per second, and the dynamic description information may be defined as the compass icon displaying direction needle in real time. In this way, the user may directly know the current direction without executing the compass function.

As for a weather forecast icon, the icon data information obtained by the mobile terminal may include weather forecast information sent from a network side, the weather forecast information may include temperature information, humidity information, and the like, the icon refresh rate may be set to 1 frame per 5 seconds, and the dynamic description information may be defined as the weather forecast icon displaying an image background which indicates the current weather, and alternately displaying information like current temperature and current humidity simultaneously.

As for a dial icon, the icon data information obtained by the mobile terminal may include signal strength information, and the dynamic description information may be defined as, when the signal strength is too low, displaying in the dynamic icon of the dialing function an image which indicates that the signal is too low to dial.

As for a SMS (short message) icon, the icon data information obtained by the mobile terminal may include unread SMS information, and the dynamic description information may be defined as, when there is unread SMS, displaying in the dynamic icon of the SMS function an image which indicates the number of unread SMS.

S105, displaying the dynamic icon.

In an embodiment of the present invention, the mobile terminal displays the generated dynamic icon. During displaying the dynamic icon, the mobile terminal may refresh the dynamic icon based on the icon refresh rate information. In other words, the refresh rate for each dynamic icon displayed on the screen of the mobile terminal is determined by the refresh rate information of the respective dynamic icon.

In an embodiment of the present invention, after displaying the dynamic icon, the mobile terminal may detect whether the dynamic icon is within a display region. When the dynamic icon is within the display region, the mobile terminal refreshes the dynamic icon based on the refresh rate and displays the refreshed dynamic icon. In the case that the mobile terminal displays the desktop icon, if the user slides the screen from side to side to switch icons displayed on the desktop so that some icons slide out of the display region, the mobile terminal stops refreshing the icons out of the display region. Furthermore, as for the icons out of the display region, the mobile terminal will not continue to generate the dynamic icon, and only when the icons return back to the display region, the mobile terminal will generate and display the dynamic icon again.

In the method for displaying a dynamic icon of the present invention, it is possible to generate a dynamic icon corresponding to each program based on the dynamic icon resource pack provided by the program, so that the icon has a dynamic effect, and the dynamic icon may be displayed on the desktop of the operating system. Furthermore, since the dynamic icon is generated in real time, the waste of storage space due to storing a dynamic video icon file in advance is avoided, and the system resources are saved. In addition, on basis of the display region, the generation and display of dynamic icon are only for the icon(s) within the display region, and the refreshing for the icon(s) out of the display region is stopped, which further improves utilization efficiency of the system resources.

In the method for displaying a dynamic icon provided by the present invention, it is possible to not only dynamically display respective information of the application program, but also display individual dynamic effects for different application programs, so that the user can intuitively see more information about the application program without executing the application program.

### Second Embodiment

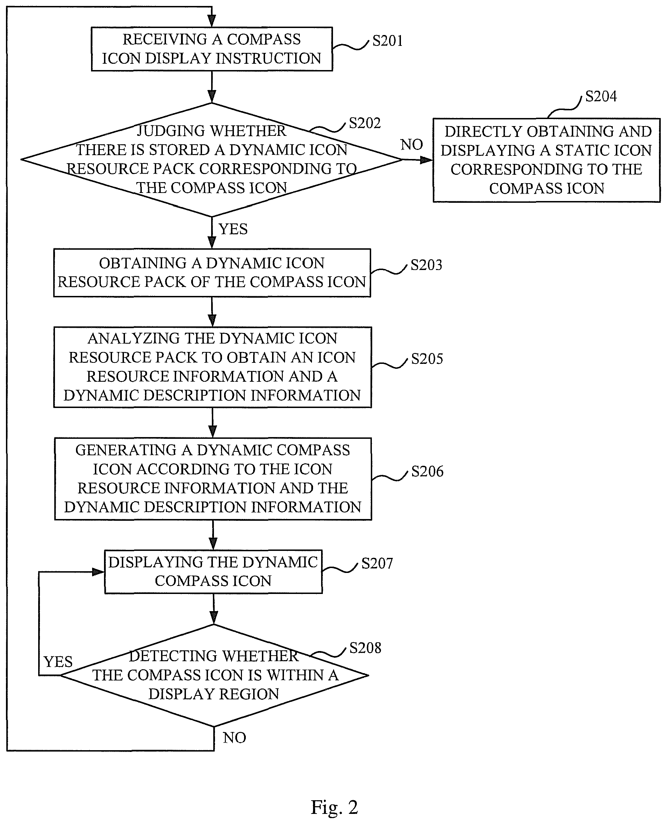

Fig. 2 is a flow chart of a method for displaying a dynamic compass icon provided by an embodiment of the present invention. As shown in Fig. 2, the method for displaying a dynamic compass icon includes the following steps.

S201, receiving a compass icon display instruction.

In an embodiment of the present invention, the mobile terminal receives a compass icon display instruction input by a user. In the present embodiment, the compass icon display instruction may be an instruction to display a desktop icon.

S202, judging whether the dynamic icon resource pack corresponding to a compass icon has been stored.

If the dynamic icon resource pack corresponding to the compass icon has been stored, the mobile terminal executes step S203, i.e., obtaining a dynamic icon resource pack of the compass icon; and if the dynamic icon resource pack corresponding to the compass icon has not been stored, the mobile terminal executes step S204, i.e., directly obtaining and displaying a static icon corresponding to the compass icon.

S203, obtaining the dynamic icon resource pack of the compass icon.

In an embodiment of the present invention, after judging that the dynamic icon resource pack corresponding to the compass icon has been stored, the mobile terminal is required to obtain the dynamic icon resource pack of the compass icon, which should include an icon resource information and a dynamic description information.

S205, analyzing the dynamic icon resource pack to obtain the icon resource information and the dynamic description information.

In an embodiment of the present invention, after obtaining the dynamic icon resource pack of the compass icon, the mobile terminal analyzes the dynamic icon resource pack to obtain the icon resource information and the dynamic description information in the dynamic icon resource pack.

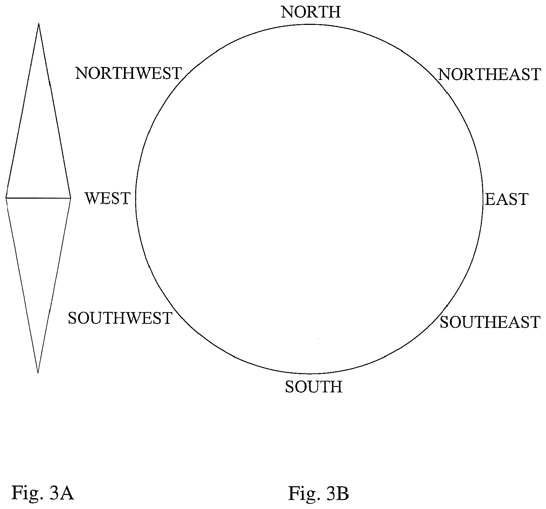

In an embodiment of the present invention, as shown in Figs. 3A-3B, the icon resource information of the compass icon includes a box compass picture and a needle picture. The dynamic description information describes a display effect of the box compass picture and the needle picture by using a custom format, and obtains gyro sensor data and GPS data from the system. In an embodiment of the present invention, the dynamic description information may further include refresh rate information of the dynamic icon, and the refresh rate of the compass icon may be 10 frames per second.

S206, generating a dynamic compass icon based on the icon resource information and the dynamic description information.

In an embodiment of the present invention, the mobile terminal adjusts the box compass picture and the needle picture based on the obtained gyro sensor data, GPS data and dynamic description information, so as to generate a dynamic compass icon in real time.

S207, displaying the dynamic compass icon.

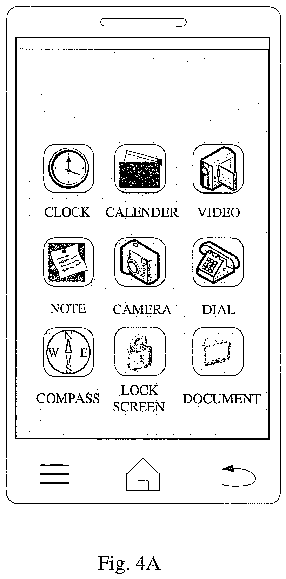

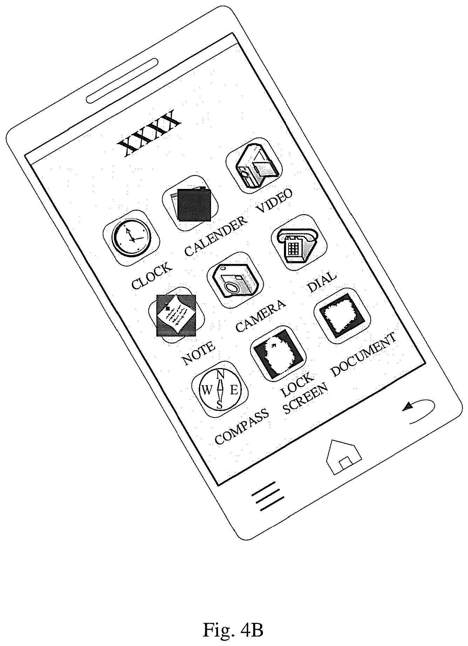

In an embodiment of the present invention, the mobile terminal displays the generated dynamic compass icon. Figs. 4A-4B are diagrams of the dynamic compass icon provided by an embodiment of the present invention. As shown in Fig. 4A, when the desktop of the mobile terminal displays a compass icon, the compass icon may display the current direction in real time. When the mobile terminal changes direction, as shown in Fig. 4B, the compass icon may adjust in real time to display the correct current direction.

S208, detecting whether the compass icon is within a display region.

When the compass icon is within the display region, the mobile terminal refreshes the compass icon based on the refresh rate and displays the refreshed compass icon. When the compass icon is out of the display region, the mobile terminal stops refreshing the compass icon. When the compass icon returns back to the display region, the mobile terminal generates and displays the dynamic compass icon again.

In the method for displaying a dynamic compass icon provided by the present invention, it is possible to generate a dynamic compass icon based on a dynamic icon resource pack of a compass icon, and to directly display the dynamic compass icon on a desktop of an operating system. Furthermore, since the dynamic compass icon is generated in real time, the waste of storage space due to storing an animation video icon in advance is avoided, and the system resources are saved. In addition, on basis of the display region, the compass icon is refreshed and displayed only when it is within the display region, and when the compass icon is out of the display region, its refreshing is stopped, which further improves utilization efficiency of the system resources.

In the method for displaying a dynamic compass icon provided by the present invention, the user can intuitively see the current direction information on the desktop without executing the compass application program.

### Third Embodiment

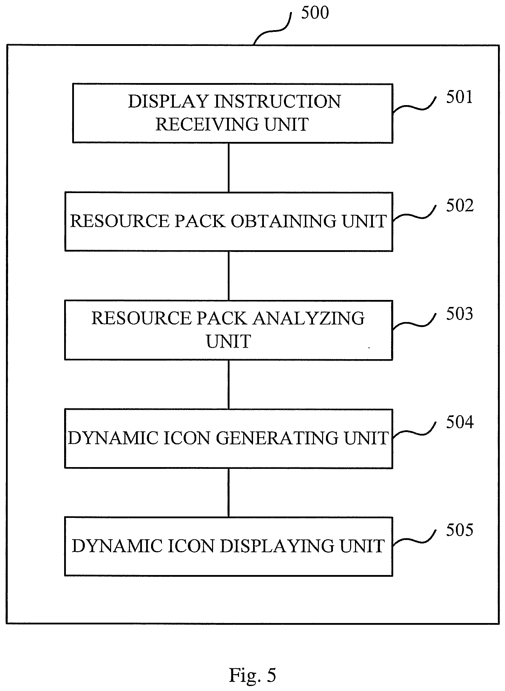

Fig. 5 is a block diagram of a device for displaying a dynamic icon provided by an embodiment of the present invention. As shown in Fig. 5, the device for displaying a dynamic icon 500 includes the following components.

A display instruction receiving unit 501 configured to receive an icon display instruction.

In an embodiment of the present invention, the display instruction receiving unit 501 of a mobile terminal receives an icon display instruction input by a user. The icon display instruction may be an instruction to display a desktop icon. For example, once the user unlocks a screen, the mobile terminal generally will display a desktop interface with a plurality of icons, and in this case, the instruction to unlock the screen input by the user is the icon display instruction. When the user inputs an instruction to exit an application program or close a current application program during execution of a certain application program, the mobile terminal will return to a desktop interface with a plurality of icons, and in this case, the instruction to exit the application program or close the current application program which is input by the user is the icon display instruction.

In other embodiments of the present invention, icons may be displayed on a desktop of an operating system. In addition, after execution of a certain application program, at least one icon may also be displayed on an interface provided by this application program. In this case, the instruction to execute the application program is also the icon display instruction.

A resource pack obtaining unit 502 configured to obtain a dynamic icon resource pack of the icon to be displayed based on the icon display instruction.

In an embodiment of the present invention, after receiving the icon display instruction input by the user, the mobile terminal is required to display a corresponding icon finally. When the display instruction receiving unit 501 receives an instruction to display the desktop input by the user, the mobile terminal is required to display the desktop background and the icons on desktop. In this case, the resource pack obtaining unit 502 is firstly required to obtain dynamic icon resource packs of all the icons to be displayed.

In an embodiment of the present invention, before the resource pack obtaining unit 502 obtains the dynamic icon resource packs of all the icons to be displayed, the mobile terminal may firstly judge whether the dynamic icon resource packs corresponding to each icon to be displayed has been stored. If the dynamic icon resource pack corresponding to the icon to be displayed has been stored, the resource pack obtaining unit 502 obtains the dynamic icon resource pack of the icon to be displayed, so as to proceed to the subsequent step(s) based on the dynamic icon resource pack to generate a dynamic icon; and if there is no corresponding dynamic icon resource pack of the icon to be displayed, the mobile terminal directly obtains and displays a static icon corresponding to the icon to be displayed.

In an embodiment of the present invention, the format of the dynamic icon resource pack may be defined in advance, which at least includes an icon resource information and a dynamic description information.

A resource pack analyzing unit 503 configured to analyze the dynamic icon resource pack to obtain the icon resource information and the dynamic description information.

In an embodiment of the present invention, after the resource pack obtaining unit 502 obtains the dynamic icon resource pack of the icon to be displayed, the resource pack analyzing unit 503 analyzes the dynamic icon resource pack to obtain the icon resource information and the dynamic description information in the dynamic icon resource pack. The dynamic icon resource pack may be provided by the developer of the application program, and when the user installs the application program, the dynamic icon resource pack of the application program is stored at the same time.

In an embodiment of the present invention, the icon resource information refers to various resource files (a picture file, a text file, and the like) and the location information thereof, which are necessary for displaying the icon. The dynamic description information describes display content and display effect of the icon resource information (picture, text, and the like) by using a custom format, for example, displays a picture, an animation, a text at a certain position, obtains application program information (e.g., date time, weather information) from the system, or obtains sensor data (e.g., compass) from the system. In an embodiment of the present invention, the dynamic icon resource pack may not include animation file(s) or video file(s) generated in advance.

A dynamic icon generating unit 504 configured to generate a dynamic icon based on the icon resource information and the dynamic description information.

In an embodiment of the present invention, the mobile terminal may not store the animation file or video file of the dynamic icon, but the dynamic icon generating unit 504 may generate in real time the dynamic icon based on the analyzed icon resource information and dynamic description information.

In an embodiment of the present invention, the dynamic description information may further include refresh rate information of the dynamic icon. The resource pack analyzing unit 503 may obtain the refresh rate information of the dynamic icon from the dynamic description information while obtaining the icon resource information and the dynamic description information by analyzing the dynamic icon resource pack, which facilitates the dynamic icon generating unit 504 to determine the refresh rate of the dynamic icon to be generated based on the refresh rate information of the dynamic icon.

According to the present invention, icon data information of the dynamic icon includes a variety of information, such as system status information, sensor data information, and program status information. The resource pack analyzing unit 503 obtains such icon data information based on the dynamic description information, and the dynamic icon generating unit 504 processes the icon resource information and the icon data information based on the dynamic description information so as to generate a dynamic icon. In this way, the dynamic icon may not only have a dynamic effect, but also display various icon data information like current system status information, sensor data information, and program status information by utilizing the dynamic effect. Herein, the system status information includes power information, time information, signal strength information, and the like of the current mobile terminal; the sensor data information includes geographical position information, direction information, angular velocity information, acceleration information, and the like of the current mobile terminal; and the program status information includes notification information of the application program, network notification information, and the like.

As for a calendar icon, the icon data information obtained by the resource pack analyzing unit 503 may include Gregorian calendar information and lunar calendar information, the icon refresh rate may be set to 1 frame per second, and the dynamic description information may be defined as the dynamic icon alternately displaying Gregorian calendar and lunar calendar. In this way, the dynamic icon generating unit 504 finally generates such an effect of the dynamic icon that Gregorian calendar and lunar calendar are alternately displayed every second. In other embodiments of the present invention, the icon data information may further include holiday information and lunar solar term information, and the finally generated dynamic icon may also display holiday information and lunar solar term information alternately.

As for a compass icon, the icon data information obtained by the resource pack analyzing unit 503 include sensor data information, the icon refresh rate may be set to 10 or 20 frames per second, and the dynamic description information may be defined as the compass icon displaying direction needle in real time. In this way, the user may directly know the current direction without executing the compass function.

As for a weather forecast icon, the icon data information obtained by the resource pack analyzing unit 503 may include weather forecast information sent from a network side, the weather forecast information may include temperature information, humidity information, and the like, the icon refresh rate may be set to 1 frame per 5 seconds, and the dynamic description information may be defined as the weather forecast icon displaying an image background which indicates the current weather, and alternately displaying information like current temperature and current humidity simultaneously.

As for a dial icon, the icon data information obtained by the resource pack analyzing unit 503 may include signal strength information, and the dynamic description information may be defined as, when the signal strength is too low, displaying in the dynamic icon of the dialing function an image which indicates that the signal is too low to dial.

As for a SMS icon, the icon data information obtained by the resource pack analyzing unit 503 may include unread SMS information, and the dynamic description information may be defined as, when there is unread SMS, displaying in the dynamic icon of the SMS function an image which indicates the number of unread SMS.

A dynamic icon displaying unit 505 configured to display the dynamic icon.

In an embodiment of the present invention, the dynamic icon displaying unit 505 displays the generated dynamic icon. During displaying the dynamic icon, the dynamic icon displaying unit 505 may refresh the dynamic icon based on the icon refresh rate information. In other words, the refresh rate for each dynamic icon is determined by the refresh rate information of the respective dynamic icon.

In an embodiment of the present invention, after the dynamic icon displaying unit 505 displays the dynamic icon, the mobile terminal may detect whether the dynamic icon is within a display region. When the dynamic icon is within the display region, the dynamic icon displaying unit 505 refreshes the dynamic icon based on the refresh rate and displays the refreshed dynamic icon. In the case that the mobile terminal displays the desktop icon, if the user slides the screen from side to side to switch icons displayed on the desktop so that some icons slide out of the display region, the dynamic icon displaying unit 505 stops refreshing the icons out of the display region. Furthermore, as for the icons out of the display region, the dynamic icon generating unit 504 will not continue to generate a dynamic icon, and only when the icons return back to the display region, the mobile terminal will generate and display the dynamic icon again.

In the device for displaying a dynamic icon provided by the present invention, it is possible to generate a dynamic icon corresponding to each program based on the dynamic icon resource pack provided by the program, so that the icon has a dynamic effect, and the dynamic icon may be displayed on the desktop of the operating system. Furthermore, since the dynamic icon is generated in real time, the waste of storage space due to storing a dynamic video icon file in advance is avoided, and the system resources are saved. In addition, on basis of the display region, the generation and play of dynamic icon are only for the icon(s) within the display region, and the refreshing for the icon(s) out of the display region is stopped, which further improves utilization efficiency of the system resources.

In the device for displaying a dynamic icon provided by the present invention, it is possible to not only dynamically display respective information of the application program, but also display individual dynamic effects for different application programs, so that the user can intuitively see more information about the application program without executing the application program.

### Fourth Embodiment

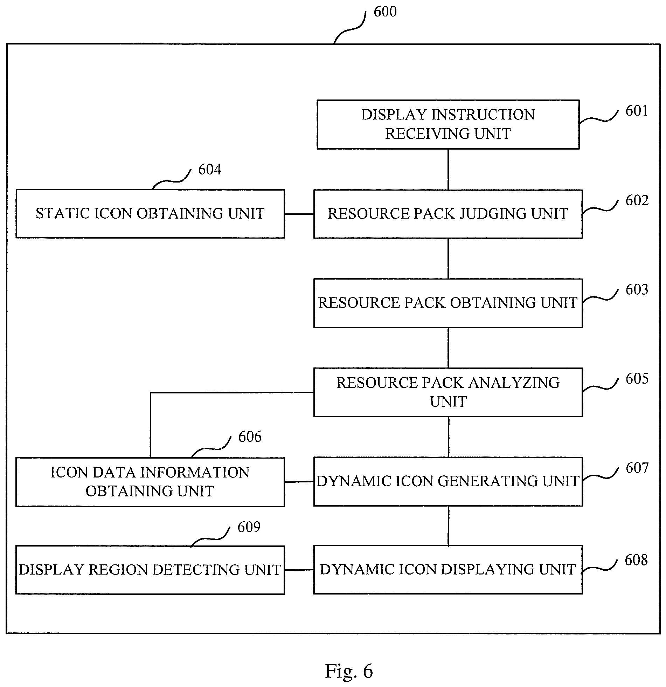

Fig. 6 is a block diagram of a device for displaying a dynamic icon provided by an embodiment of the present invention. As shown in Fig. 6, the device for displaying a dynamic icon 600 includes the following components.

A display instruction receiving unit 601 configured to receive a compass icon display instruction.

In an embodiment of the present invention, the display instruction receiving unit 601 receives a compass icon display instruction input by a user. In the present embodiment, the compass icon display instruction may be an instruction to display a desktop icon.

A resource pack judging unit 602 configured to judge whether the dynamic icon resource pack corresponding to a compass icon has been stored.

If the dynamic icon resource pack corresponding to the compass icon has been stored, the resource pack obtaining unit 603 obtains a dynamic icon resource pack of the compass icon. If the dynamic icon resource pack corresponding to the compass icon has not been stored, a static icon obtaining unit 604 directly obtains and displays a static icon corresponding to the compass icon.

A resource pack obtaining unit 603 configured to obtain the dynamic icon resource pack of the compass icon.

In an embodiment of the present invention, after the resource pack judging unit 602 judges that the dynamic icon resource pack corresponding to the compass icon has been stored, the resource pack obtaining unit 603 is required to obtain the dynamic icon resource pack of the compass icon, which should include an icon resource information and a dynamic description information.

A resource pack analyzing unit 605 configured to analyze the dynamic icon resource pack to obtain the icon resource information and the dynamic description information.

In an embodiment of the present invention, after the resource pack obtaining unit 603 obtains the dynamic icon resource pack of the compass icon, the resource pack analyzing unit 605 analyzes the dynamic icon resource pack to obtain the icon resource information and the dynamic description information in the dynamic icon resource pack.

In an embodiment of the present invention, as shown in Figs. 3A-3B, the icon resource information of the compass icon comprises a box compass picture and a needle picture. The dynamic description information describes a display effect of the box compass picture and the needle picture by using a custom format. In an embodiment of the present invention, the dynamic description information may further include refresh rate information of the dynamic icon, and the refresh rate of the compass icon may be 10 frames per second.

An icon data information obtaining unit 606 configured to obtain icon data information based on the dynamic description information.

In an embodiment of the present invention, the icon data information obtaining unit 606 obtains icon data information like gyro sensor data, GPS data and the like from the system.

A dynamic icon generating unit 607 configured to process the icon resource information and the icon data information based on the dynamic description information to generate a dynamic compass icon.

In an embodiment of the present invention, the dynamic icon generating unit 607 adjusts the box compass picture and the needle picture based on the gyro sensor data and GPS data obtained by the icon data information obtaining unit 606, as well as the dynamic description information analyzed by the resource pack analyzing unit 605, so as to generate the dynamic compass icon in real time.

A dynamic icon displaying unit 608 configured to display the dynamic compass icon.

In an embodiment of the present invention, the dynamic icon displaying unit 608 displays the generated dynamic compass icon. Figs. 4A-4B are diagrams of the dynamic compass icon provided by an embodiment of the present invention. As shown in Fig. 4A, when the desktop of the mobile terminal displays the compass icon, the compass icon may display the current direction in real time. When the mobile terminal changes direction, as shown in Fig. 4B, the compass icon may adjust in real time to display the correct current direction.

A display region detecting unit 609 configured to detect whether the compass icon is within a display region.

When the compass icon is within the display region, the display region detecting unit 609 refreshes the compass icon based on the refresh rate and displays the refreshed compass icon. When the compass icon is out of the display region, the display region detecting unit 609 stops refreshing the compass icon. When the compass icon returns back to the display region, the mobile terminal generates and displays the dynamic compass icon again.

In the device for displaying a dynamic compass icon provided by the present invention, it is possible to generate a dynamic compass icon based on a dynamic icon resource pack of a compass icon, and to directly display the dynamic compass icon on a desktop of an operating system. Furthermore, since the dynamic compass icon is generated in real time, the waste of storage space due to storing an animation video icon in advance is avoided, and the system resources are saved. In addition, on basis of the display region, the compass icon is refreshed and displayed only when it is within the display region, and when the compass icon is out of the display region, its refreshing is stopped, which further improves utilization efficiency of the system resources.

In the device for displaying a dynamic compass icon provided by the present invention, the user can intuitively see the current direction information on the desktop without executing the compass application program.

The object, technical solution and advantageous effects of the present invention have been described in detail with reference to the above-mentioned specific embodiments. It should be appreciated that the above-mentioned embodiments are only specific implementations of the present invention, and do not intend to limit the protection scope of the present invention. Any modification and improvement can be envisaged within the principle of the present invention, which still fall within the protection scope of the present invention.

## Claims

1. A method for displaying a dynamic icon corresponding to an application program, **characterized in that**, the method comprises:
receiving (S101) an icon display instruction;
obtaining (S102) a dynamic icon resource pack of an icon to be displayed based on the icon display instruction;
analyzing (S103) the dynamic icon resource pack to obtain an icon resource information and a dynamic description information, wherein the icon resource information refers to various resource files and location information thereof, and the dynamic description information describes display content and display effect of the icon resource information by using a custom format;
obtaining icon data information based on the dynamic description information, wherein the icon data information comprises:
system status information comprising power information, time information, and signal strength information;
sensor data information comprising geographical position information, direction information, angular velocity information, and acceleration information; and
program status information comprising notification information of an application program, and network notification information;
processing the icon resource information and the icon data information based on the dynamic description information to generate (S104) the dynamic icon based on the icon resource information, the icon data information, and the dynamic description information; and
displaying (S105) the dynamic icon;
wherein the dynamic icon is a dynamic compass icon, the icon resource information of the dynamic compass icon comprises a box compass picture and a needle picture, and the dynamic description information of the dynamic compass icon describes a display effect of the box compass picture and the needle picture by using a custom format, and gyro sensor data and GPS data are obtained from a system by an icon data information obtaining unit (606).

2. The method for displaying the dynamic icon of claim 1, **characterized in that**, before the obtaining (S102) the dynamic icon resource pack of the icon to be displayed based on the icon display instruction, the method further comprises:
judging whether the dynamic icon resource pack corresponding to the icon to be displayed has been stored; and
if the dynamic icon resource pack corresponding to the icon to be displayed has been stored, obtaining the dynamic icon resource pack of the icon to be displayed based on the icon display instruction.

3. The method for displaying the dynamic icon of claim 2, **characterized in that**, the method further comprises:
if the dynamic icon resource pack corresponding to the icon to be displayed has not been stored, obtaining and displaying a static icon of the icon to be displayed.

4. The method for displaying the dynamic icon of claim 1, **characterized in that**, before the displaying (S105) the dynamic icon, the method further comprises:
detecting whether the dynamic icon is within a display region; and
when the dynamic icon is within the display region, refreshing the dynamic icon.

5. The method for displaying the dynamic icon of claim 4, **characterized in that**, the method further comprises:
when the dynamic icon is not within the display region, stopping refreshing the dynamic icon.

6. The method for displaying the dynamic icon of claim 1, **characterized in that**, the dynamic description information further comprises an icon refresh rate information.

7. A device (500, 600) for displaying a dynamic icon corresponding to an application program, **characterized in that**, the device (500, 600) comprises:
a display instruction receiving unit (501, 601) configured to receive an icon display instruction;
a resource pack obtaining unit (502, 603) configured to obtain a dynamic icon resource pack of an icon to be displayed based on the icon display instruction;
a resource pack analyzing unit (503, 605) configured to analyze the dynamic icon resource pack to obtain an icon resource information and a dynamic description information, wherein the icon resource information refers to various resource files and location information thereof, and the dynamic description information describes display content and display effect of the icon resource information by using a custom format;
an icon data information obtaining unit (606) configured to obtain icon data information based on the dynamic description information, wherein the icon data information comprises:
system status information comprising power information, time information, and signal strength information;
sensor data information comprising geographical position information, direction information, angular velocity information, and acceleration information; and
program status information comprising notification information of an application program, and network notification information;
a dynamic icon generating unit (504, 607) configured to process the icon resource information and the icon data information based on the dynamic description information to generate the dynamic icon based on the icon resource information, the icon data information, and the dynamic description information; and
a dynamic icon displaying unit (505, 608) configured to display the dynamic icon;
wherein the dynamic icon is a dynamic compass icon, the icon resource information of the dynamic compass icon comprises a box compass picture and a needle picture, and the dynamic description information of the dynamic compass icon describes a display effect of the box compass picture and the needle picture by using a custom format, and the icon data information obtaining unit (606) is configured to obtain gyro sensor data and GPS data from a system.

8. The device for displaying the dynamic icon of claim 7, **characterized in that**, the device (500, 600) further comprises:
a resource pack judging unit (602) configured to judge whether the dynamic icon resource pack corresponding to the icon to be displayed has been stored; and
the resource pack obtaining unit (502, 603) is configured to obtain the dynamic icon resource pack of the icon to be displayed based on the icon display instruction when the dynamic icon resource pack corresponding to the icon to be displayed has been stored.

9. The device for displaying the dynamic icon of claim 8, **characterized in that**, the device (500, 600) further comprises:
a static icon obtaining unit (604) configured to obtain and display a static icon of the icon to be displayed when the dynamic icon resource pack corresponding to the icon to be displayed has not been stored.

10. The device for displaying the dynamic icon of claim 7, **characterized in that**, the device (600) further comprises:
a display region detecting unit (609) configured to detect whether the dynamic icon is within a display region,
when the dynamic icon is within the display region, the dynamic icon displaying unit (505, 608) refreshes the dynamic icon.

11. A computer program, which when executing on a processor of a terminal, performs a method according to any one of claims 1 to 6.

## Patentansprüche

1. Verfahren zum Anzeigen eines dynamischen Symbols, das einem Anwendungsprogramm entspricht, **dadurch gekennzeichnet, dass** das Verfahren umfasst:
Empfangen (S101) einer Symbol-Anzeigeanweisung,
Abrufen (S102) eines dynamischen Symbol-Ressourcenpakets für ein Symbol, das angezeigt werden soll, auf Grundlage der Symbol-Anzeigeanweisung,
Analysieren (S103) des dynamischen Symbol-Ressourcenpakets, um Symbol-Ressourcen-Informationen und dynamische Beschreibungsinformationen abzurufen, wobei die Symbol-Ressourcen-Informationen sich auf verschiedene Ressourcen-Dateien und Ortsinformationen dafür beziehen, und die dynamischen Beschreibungsinformationen den Anzeigeinhalt und Anzeigeeffekt der Symbol-Ressourcen-Informationen unter Verwendung eines benutzerspezifischen Formats beschreiben,
Abrufen von Symbol-Dateninformationen auf Grundlage der dynamischen Beschreibungsinformationen, wobei die Symbol-Dateninformationen umfassen:
Systemstatus-Informationen umfassend Energieinformationen, Zeitinformationen und Signalstärke-Informationen,
Sensordaten-Informationen umfassend geographische Positionsinformationen, Richtungsinformationen, Winkelgeschwindigkeits-Informationen und Beschleunigungsinformationen, und
Programmstatus-Informationen umfassend Benachrichtigungsinformationen eines Anwendungsprogramms und Netzwerkbenachrichtigungs-Informationen,
Verarbeiten der Symbol-Ressourcen-Informationen und der Symbol-Dateninformationen auf Grundlage der dynamischen Beschreibungsinformationen, um das dynamische Symbol auf Grundlage der Symbol-Ressourcen-Informationen, der Symbol-Dateninformationen und der dynamischen Beschreibungsinformationen zu erzeugen (S104), und
Anzeigen (S105) des dynamischen Symbols,
wobei das dynamische Symbol ein dynamisches Kompass-Symbol ist, die Symbol-Ressourcen-Informationen des dynamischen Kompass-Symbols ein Kastenkompass-Bild und ein Nadelbild umfassen und die dynamischen Beschreibungsinformationen des dynamischen Kompass-Symbols einen Anzeigeeffekt des Kastenkompass-Bilds und des Nadelbilds unter Verwendung eines benutzerspezifischen Formats beschreiben, und Gyrosensor-Daten und GPS-Daten von einem System durch eine Symboldaten-Informationsabruf-Einheit (606) abgerufen werden.

2. Verfahren zum Anzeigen des dynamischen Symbols nach Anspruch 1, **dadurch gekennzeichnet, dass** das Verfahren vor dem Abrufen (S102) des dynamischen Symbol-Ressourcenpakets des Symbols, das angezeigt werden soll, auf Grundlage der Symbol-Anzeigeanweisung ferner umfasst:
Beurteilen, ob das dynamische Symbol-Ressourcenpaket, das dem Symbol entspricht, das angezeigt werden soll, bereits gespeichert worden ist, und
wenn das dynamische Symbol-Ressourcenpaket, das dem Symbol entspricht, das angezeigt werden soll, bereits gespeichert worden ist, Abrufen des dynamischen Symbol-Ressourcenpakets des Symbols, das angezeigt werden soll, auf Grundlage der Symbol-Anzeigeanweisung.

3. Verfahren zum Anzeigen des dynamischen Symbols nach Anspruch 2, **dadurch gekennzeichnet, dass** das Verfahren ferner umfasst:
wenn das dynamische Symbol-Ressourcenpaket, das dem Symbol entspricht, das angezeigt werden soll, noch nicht gespeichert worden ist, Abrufen und Anzeigen eines statischen Symbols des Symbols, das angezeigt werden soll.

4. Verfahren zum Anzeigen des dynamischen Symbols nach Anspruch 1, **dadurch gekennzeichnet, dass** das Verfahren vor dem Anzeigen (S105) des dynamischen Symbols ferner umfasst:
Erkennen, ob das dynamische Symbol sich innerhalb einer Anzeigeregion befindet, und
wenn das dynamische Symbol sich innerhalb der Anzeigeregion befindet, Aktualisieren des dynamischen Symbols.

5. Verfahren zum Anzeigen des dynamischen Symbols nach Anspruch 4, **dadurch gekennzeichnet, dass** das Verfahren ferner umfasst:
wenn das dynamische Symbol sich nicht innerhalb der Anzeigeregion befindet, Stoppen der Aktualisierung des dynamischen Symbols.

6. Verfahren zum Anzeigen des dynamischen Symbols nach Anspruch 1, **dadurch gekennzeichnet, dass** die dynamischen Beschreibungsinformationen ferner Symbol-Aktualisierungsraten-Informationen umfassen.

7. Vorrichtung (500, 600) zum Anzeigen eines dynamischen Symbols, das einem Anwendungsprogramm entspricht, **dadurch gekennzeichnet, dass** die Vorrichtung (500, 600) umfasst:
eine Anzeigeanweisungs-Empfangseinheit (501, 601), die dazu ausgestaltet ist, eine Symbol-Anzeigeanweisung zu empfangen,
eine Ressourcenpaket-Abrufeinheit (502, 603), die dazu ausgestaltet ist, ein dynamisches Symbol-Ressourcenpaket eines Symbols, das angezeigt werden soll, auf Grundlage der Symbol-Anzeigeanweisung abzurufen,
eine Ressourcenpaket-Analyseeinheit (503, 605), die dazu ausgestaltet ist, das dynamische Symbol-Ressourcenpaket zu analysieren, um Symbol-Ressourcen-Informationen und dynamische Beschreibungsinformationen abzurufen, wobei die Symbol-Ressourcen-Informationen sich auf verschiedene Ressourcen-Dateien und Ortsinformationen dafür beziehen, und die dynamischen Beschreibungsinformationen den Anzeigeinhalt und Anzeigeeffekt der Symbol-Ressourcen-Informationen unter Verwendung eines benutzerspezifischen Formats beschreiben,
eine Symbol-Dateninformations-Abrufeinheit (606), die dazu ausgestaltet ist, Symbol-Dateninformationen auf Grundlage der dynamischen Beschreibungsinformationen abzurufen, wobei die Symbol-Dateninformationen umfassen:
Systemstatus-Informationen umfassend Energieinformationen, Zeitinformationen und Signalstärke-Informationen,
Sensordaten-Informationen umfassend geographische Positionsinformationen, Richtungsinformationen, Winkelgeschwindigkeits-Informationen und Beschleunigungsinformationen, und
Programmstatus-Informationen umfassend Benachrichtigungsinformationen eines Anwendungsprogramms und Netzwerkbenachrichtigungs-Informationen,
eine Einheit (504, 607) zum Erzeugen eines dynamischen Symbols, die dazu ausgestaltet ist, die Symbol-Ressourcen-Informationen und die Symbol-Dateninformationen auf Grundlage der dynamischen Beschreibungsinformationen zu verarbeiten, um das dynamische Symbol auf Grundlage der Symbol-Ressourcen-Informationen, der Symbol-Dateninformationen und der dynamischen Beschreibungsinformationen zu erzeugen, und
eine Einheit (505, 608) zum Anzeigen des dynamischen Symbols, die dazu ausgestaltet ist, das dynamische Symbol anzuzeigen,
wobei das dynamische Symbol ein dynamisches Kompass-Symbol ist, die Symbol-Ressourcen-Informationen des dynamischen Kompass-Symbols ein Kastenkompass-Bild und ein Nadelbild umfassen und die dynamischen Beschreibungsinformationen des dynamischen Kompass-Symbols einen Anzeigeeffekt des Kastenkompass-Bilds und des Nadelbilds unter Verwendung eines benutzerspezifischen Formats beschreiben, und die Symboldaten-Informationsabruf-Einheit (606) dazu ausgestaltet ist, Gyrosensor-Daten und GPS-Daten von einem System abzurufen.

8. Vorrichtung zum Anzeigen des dynamischen Symbols nach Anspruch 7, **dadurch gekennzeichnet, dass** die Vorrichtung (500, 600) ferner umfasst:
eine Ressourcenpaket-Beurteilungseinheit (602), die dazu ausgestaltet ist, zu beurteilen, ob das dynamische Symbol-Ressourcenpaket, das dem Symbol entspricht, das angezeigt werden soll, bereits gespeichert worden ist, und
die Ressourcenpaket-Abrufeinheit (502, 603), die dazu ausgestaltet ist, das dynamische Symbol-Ressourcenpaket des Symbols, das angezeigt werden soll, auf Grundlage der Symbol-Anzeigeanweisung abzurufen, wenn das dynamische Symbol-Ressourcenpaket, das dem Symbol entspricht, das angezeigt werden soll, bereits gespeichert worden ist.

9. Vorrichtung zum Anzeigen des dynamischen Symbols nach Anspruch 8, **dadurch gekennzeichnet, dass** die Vorrichtung (500, 600) ferner umfasst:
eine Abrufeinheit (604) für ein statisches Symbol, die dazu ausgestaltet ist, ein statisches Symbol des Symbols, das angezeigt werden soll, abzurufen und anzuzeigen, wenn das dynamische Symbol-Ressourcenpaket, das dem Symbol entspricht, das angezeigt werden soll, noch nicht gespeichert worden ist.

10. Vorrichtung zum Anzeigen des dynamischen Symbols nach Anspruch 7, **dadurch gekennzeichnet, dass** die Vorrichtung (600) ferner umfasst:
eine Anzeigeregion-Erkennungseinheit (609), die dazu ausgestaltet ist, zu erkennen, ob das dynamische Symbol sich innerhalb einer Anzeigeregion befindet,
und wenn das dynamische Symbol sich innerhalb der Anzeigeregion befindet, die Einheit (505, 608) zum Anzeigen des dynamischen Symbols das dynamische Symbol aktualisiert.

11. Computerprogramm, das, wenn es auf einem Prozessor eines Endgeräts ausgeführt wird, ein Verfahren nach einem der Ansprüche 1 bis 6 durchführt.

## Revendications

1. Procédé destiné à afficher une icône dynamique correspondant à un programme d'application, **caractérisé en ce que**, le procédé comprend :
la réception (S101) d'une instruction d'affichage d'icône ;
l'obtention (S102) d'un ensemble de ressources d'icône dynamique d'une icône à afficher sur la base de l'instruction d'affichage d'icône ;
l'analyse (S103) de l'ensemble de ressources d'icône dynamique pour obtenir une information de ressource d'icône et une information de description dynamique, dans lequel l'information de ressource d'icône fait référence à divers fichiers de ressource et informations d'emplacement de ceux-ci, et l'information de description dynamique décrit un contenu d'affichage et un effet d'affichage de l'information de ressource d'icône en utilisant un format personnalisé ;
l'obtention d'une information de donnée d'icône sur la base de l'information de description dynamique, dans lequel l'information de donnée d'icône comprend :
une information d'état de système comprenant une information de puissance, une information de temps et une information de force de signal ;
une information de donnée de capteur comprenant une information de position géographique, une information de direction, une information de vitesse angulaire et une information d'accélération ; et
une information d'état de programme comprenant une information de notification d'un programme d'application et une information de notification de réseau ;
le traitement de l'information de ressource d'icône et de l'information de donnée d'icône sur la base de l'information de description dynamique pour produire (S104) l'icône dynamique sur la base de l'information de ressource d'icône, de l'information de donnée d'icône et de l'information de description dynamique ; et
l'affichage (S105) de l'icône dynamique ;
dans lequel l'icône dynamique est une icône de boussole dynamique, l'information de ressource d'icône de l'icône de boussole dynamique comprend une image de boussole dans un boîtier et une image d'aiguille, et l'information de description dynamique de l'icône de boussole dynamique décrit un effet d'affichage de l'image de boussole dans un boîtier et de l'image d'aiguille en utilisant un format personnalisé, et une donnée de capteur gyroscopique et une donnée GPS sont obtenues depuis un système par une unité d'obtention d'information de donnée d'icône (606).

2. Procédé d'affichage de l'icône dynamique selon la revendication 1, **caractérisé en ce que**, avant l'obtention (S102) de l'ensemble de ressources d'icône dynamique de l'icône à afficher sur la base de l'instruction d'affichage d'icône, le procédé comprend en outre :
le fait d'évaluer si l'ensemble de ressources d'icône dynamique correspondant à l'icône à afficher a été stocké ; et
si l'ensemble de ressources d'icône dynamique correspondant à l'icône à afficher a été stocké, l'obtention de l'ensemble de ressources d'icône dynamique de l'icône à afficher sur la base de l'instruction d'affichage d'icône.

3. Procédé d'affichage de l'icône dynamique selon la revendication 2, **caractérisé en ce que**, le procédé comprend en outre :
si l'ensemble de ressources d'icône dynamique correspondant à l'icône à afficher n'a pas été stocké, l'obtention et l'affichage d'une icône statique de l'icône à afficher.

4. Procédé d'affichage de l'icône dynamique selon la revendication 1, **caractérisé en ce que**, avant l'affichage (S105) de l'icône dynamique, le procédé comprend en outre :
le fait de détecter si l'icône dynamique se trouve à l'intérieur d'une région d'affichage ; et
lorsque l'icône dynamique se trouve à l'intérieur de la région d'affichage, le rafraîchissement de l'icône dynamique.

5. Procédé d'affichage de l'icône dynamique selon la revendication 4, **caractérisé en ce que**, le procédé comprend en outre :
lorsque l'icône dynamique ne se trouve pas à l'intérieur de la région d'affichage, l'arrêt du rafraîchissement de l'icône dynamique.

6. Procédé d'affichage de l'icône dynamique selon la revendication 1, **caractérisé en ce que**, l'information de description dynamique comprend en outre une information de fréquence de rafraîchissement d'icône.

7. Dispositif (500, 600) destiné à afficher une icône dynamique correspondant à un programme d'application, **caractérisé en ce que**, le dispositif (500, 600) comprend :
une unité de réception d'instruction d'affichage (501, 601) configurée pour recevoir une instruction d'affichage d'icône ;
une unité d'obtention d'un ensemble de ressources (502, 603) configurée pour obtenir un ensemble de ressources d'icône dynamique d'une icône à afficher sur la base de l'instruction d'affichage d'icône ;
une unité d'analyse d'un ensemble de ressources (503, 605) configurée pour analyser l'ensemble de ressources d'icône dynamique afin d'obtenir une information de ressource d'icône et une information de description dynamique, dans lequel l'information de ressource d'icône fait référence à divers fichiers de ressource et informations d'emplacement de ceux-ci, et l'information de description dynamique décrit un contenu d'affichage et un effet d'affichage de l'information de ressource d'icône en utilisant un format personnalisé ;
une unité d'obtention d'information de donnée d'icône (606) configurée pour obtenir une information de donnée d'icône sur la base de l'information de description dynamique, dans lequel l'information de donnée d'icône comprend :
une information d'état de système comprenant une information de puissance, une information de temps et une information de force de signal ;
une information de donnée de capteur comprenant une information de position géographique, une information de direction, une information de vitesse angulaire et une information d'accélération ; et
une information d'état de programme comprenant une information de notification d'un programme d'application et une information de notification de réseau ;
une unité de production d'icône dynamique (504, 607) configurée pour traiter l'information de ressource d'icône et l'information de donnée d'icône sur la base de l'information de description dynamique afin de produire l'icône dynamique sur la base de l'information de ressource d'icône, de l'information de donnée d'icône et de l'information de description dynamique ; et
une unité d'affichage d'icône dynamique (505, 608) configurée pour afficher l'icône dynamique ;
dans lequel l'icône dynamique est une icône de boussole dynamique, l'information de ressource d'icône de l'icône de boussole dynamique comprend une image de boussole dans un boîtier et une image d'aiguille, et l'information de description dynamique de l'icône de boussole dynamique décrit un effet d'affichage de l'image de boussole dans un boîtier et de l'image d'aiguille en utilisant un format personnalisé, et l'unité d'obtention d'information de donnée d'icône (606) est configurée pour obtenir une donnée de capteur gyroscopique et une donnée GPS depuis un système.

8. Dispositif destiné à afficher l'icône dynamique selon la revendication 7, **caractérisé en ce que**, le dispositif (500, 600) comprend en outre :
une unité d'évaluation d'un ensemble de ressources (602) configurée pour évaluer si l'ensemble de ressources d'icône dynamique correspondant à l'icône à afficher a été stocké ; et
l'unité d'obtention d'un ensemble de ressources (502, 603) est configurée pour obtenir l'ensemble de ressources d'icône dynamique de l'icône à afficher sur la base de l'instruction d'affichage d'icône lorsque l'ensemble de ressources d'icône dynamique correspondant à l'icône à afficher a été stocké.

9. Dispositif destiné à afficher l'icône dynamique selon la revendication 8, **caractérisé en ce que**, le dispositif (500, 600) comprend en outre :
une unité d'obtention d'icône statique (604) configurée pour obtenir et afficher une icône statique de l'icône à afficher lorsque l'ensemble de ressources d'icône dynamique correspondant à l'icône à afficher n'a pas été stocké.

10. Dispositif destiné à afficher l'icône dynamique selon la revendication 7, **caractérisé en ce que**, le dispositif (600) comprend en outre :
une unité de détection de région d'affichage (609) configurée pour détecter si l'icône dynamique se trouve à l'intérieur d'une région d'affichage,
lorsque l'icône dynamique se trouve à l'intérieur de la région d'affichage, l'unité d'affichage d'icône dynamique (505, 608) rafraîchit l'icône dynamique.

11. Programme informatique qui, lorsqu'il est exécuté sur un processeur d'un terminal, réalise un procédé selon l'une quelconque des revendications 1 à 6.
